(19) Europäisches Patentamt / European Patent Office / Office européen des brevets

(11) **EP 3 661 978 B1**

(12) **EUROPEAN PATENT SPECIFICATION**


(45) Date of publication and mention of the grant of the patent:
**27.03.2024 Bulletin 2024/13**

(21) Application number: **18746227.0**

(22) Date of filing: **03.08.2018**

(51) International Patent Classification (IPC):
***C08F 10/08*** *(2006.01)* ***C08F 4/6592*** *(2006.01)*
***C09J 123/20*** *(2006.01)*

(52) Cooperative Patent Classification (CPC):
(C-Sets available)
**C08F 10/08; C09J 123/20;** C08F 4/65912 (Cont.)

(86) International application number:
**PCT/EP2018/071107**

(87) International publication number:
**WO 2019/025581 (07.02.2019 Gazette 2019/06)**


# (54) BUTENE-1 POLYMER HAVING A HIGH MELT FLOW RATE

BUTEN-1-POLYMER MIT HOHER SCHMELZFLUSSRATE

POLYMÈRE BUTÈNE-1 PRÉSENTANT UN INDICE DE FLUIDITÉ ÉLEVÉ


(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **04.08.2017 EP 17184882**

(43) Date of publication of application:
**10.06.2020 Bulletin 2020/24**



(73) Proprietor: **Basell Poliolefine Italia S.r.l.**
**20127 Milano (IT)**

(72) Inventors:
- **MARCHINI, Roberta**
  **44122 Ferrara (IT)**
- **SPATARO, Stefano**
  **44122 Ferrara (IT)**
- **PICA, Roberta**
  **44122 Ferrara (IT)**

(74) Representative: **LyondellBasell**
**c/o Basell Poliolefine Italia**
**Intellectual Property**
**P.le Donegani 12**
**44122 Ferrara (IT)**



(56) References cited:
**EP-A1- 1 477 499**
**WO-A1-2009/000637**
**WO-A2-2004/099269**



Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).


EP 3 661 978 B1

(52) Cooperative Patent Classification (CPC): (Cont.)

C-Sets
**C08F 210/08, C08F 4/65927;**
C08F 210/08, C08F 210/16, C08F 2500/12,
C08F 2500/17, C08F 2500/03, C08F 2500/08

## Description

### FIELD OF THE INVENTION

The present disclosure relates to a butene-1 polymer having a melt flow rate of not less than 100 g/min., measured according to norm ISO 1133 with a load of 2.16 kg at 190 °C, thus having a high fluidity in the molten state.
The butene-1 polymer provides good tensile properties, low hardness, low flexural modulus and a low glass transition temperature, while still retaining a measurable crystallinity.
The present butene-1 polymer has many applications. In particular the present butene-1 polymer can be used in the production of films and fibers, as a component of hot-melt adhesives, as a polymer additive to enhance rheological, mechanical and optical properties of polymer compositions, or as a fluidizer for lubricants.

### BACKGROUND OF THE INVENTION

Butene-1 polymers having high melt flow have previously been decribed, in particular in US4677025, US4960820, WO2006045687 and WO2015074830. These polymers have been used in many application fields, due to their valuable properties (such as chemical inertia, mechanical properties and non-toxicity). Other reference documents are EP 1477 499, WO 2004/099269 and WO 2009/000637.
In particular, due to their high fluidity in the molten state and their physical properties, the butene-1 polymers with high melt flow rate can be used in the production of films and fibers, optionally blended with other polyolefins, and in various kinds of holt-melt formulations.
As explained in US4677025, the molecular weights and molecular weight distribution of the butene-1 polymer has an effect on the final polymer properties
It has now been found that by a proper selection of molecular weights, molecular weight distribution and melt flow rate, which is made possible by using a metallocene catalyst, an advantageous profile of properties is achieved.

### SUMMARY OF THE INVENTION

Thus the present disclosure provides a butene-1 polymer having:

a) a Melt Flow Rate value of from 100 to 300 g/10 min., preferably from 110 to 300 g/10 min., more preferably from 150 to 250 g/10 min., measured according to ISO 1133 at 190°C with a load of 2.16 kg (hereinafter called "MFR");
b) an intrinsic viscosity (IV) measured in tetrahydronaphthalene (THN) at 135°C equal to or lower than 0.70 dl/g, or equal to or lower than 0.65 dl/g, in particular from 0.50 dl/g to 0.70 dl/g or from 0.50 dl/g to 0.65 dl/g;
c) a Mw/Mn value, where Mw is the weight average molar mass and Mn is the number average molar mass, both measured by GPC (Gel Permeation Chromatography), equal to or lower than 2.8, in particular equal to or lower than 2.5, the lower limit being of 1.5 in all cases;
d) a Mz value of 90,000 g/mol or higher, or of 100,000 g/mol or higher, in particular from 90,000 to 200,000 g/mol or from 100,000 to 190,000 g/mol;
e) a comonomer content, when comonomer is present, of up to 10% by mole, in particular of from 1% to 10% by mole, or from 4% to 10% by mole or from 6.5% to 10% by mole;
f) a glass transition temperature of -16°C or less, wherein the lower limit is -23°C .

The butene-1 polymer provided herein can be obtained directly in polymerization, without requiring the use of free radical generating agents, like peroxides, to increase the MFR value, thus avoiding the chemical contamination and unpleasant odor which results from the introduction of free radical generating agents.
Such butene-1 polymer has a low flexural modulus, high values of elongation at break and a low glass transition temperature, which are useful properties in films and fibers, where the present butene-1 polymer can be used in blend with other polyolefins, particularly with the propylene polymers conventionally used for producing said articles, and also in hot melt compositions.

### DETAILED DESCRIPTION OF THE INVENTION

From the above definition it is clear that the present butene-1 polymer can be a homopolymer or a butene-1 copolymer. The butene-1 copolymer can comprise one or more comonomers selected from ethylene and higher alpha-olefins.
Specific examples of higher alpha-olefins that can be present as comonomers, in addition or in alternative to ethylene, in the butene-1 copolymer, are the alpha-olefins of formula $CH_2 = CHR$ wherein R is methyl or an alkyl radical

containing 3 to 8 or 3 to 6 carbon atoms, such as propylene, hexene-1, octene-1.

However ethylene is the preferred comonomer.

The present butene-1 polymer has a measurable crystallinity, as demonstrated by the presence, in the Differential Scanning Calorimetry (DSC) pattern, of the melting temperature peaks of crystalline butene-1 polymers.

In particular, the present butene-1 polymer shows one or more melting peaks in the second DSC heating scan. Such temperature peak or peaks, generally occurring at temperatures equal to or lower than 90 °C, or equal to or lower than 85 °C in particular from 40 °C to 90 °C, or from 45 °C to 85 °C, or from 45 °C to 80 °C, or from 45 °C to 70 °C, are attributed to the melting point of crystalline form II of the butene-1 polymers (TmII) and the area under the peak (or peaks) is taken as the global melting enthalpy (DH TmII). However, if more than one peak is present, the highest (most intense) one is taken as TmII.

Specific global DH TmII values for the present butene-1 polymer are of 25 J/g or less, in particular of from 0.2 to 25 J/g, or from 0.2 to 20 J/g, measured with a scanning speed corresponding to 10°C/min.

Moreover, the present butene-1 polymer shows one or more melting peaks, generally occurring at temperatures equal to or lower than 100°C, or equal to or lower than 88°C, in particular from 30°C to 100°C, or from 30°C to 90°C, or from 30°C to 88°C, or from 30°C to 75°C in a DSC heating scan carried out after aging. Such temperature peak or peaks are attributed to the melting point crystalline form I of the butene-1 polymers (TmI) and the area under the peak (or peaks) is taken as the global melting enthalpy (DH TmI). However, if more than one peak is present, the highest (most intense) one is taken as TmI.

Specific global DH TmI values for the present butene-1 copolymer are of 65 J/g or less, or from 45 J/g or less, in particular of from 25 to 65 J/g, or from 30 to 45 J/g, measured with a scanning speed corresponding to 10°C/min.

The present butene-1 polymer can also have a detectable content of crystalline form III. Crystalline form III is detectable via the X-ray diffraction method described in the Journal of Polymer Science Part B: Polymer Letters Volume 1, Issue 11, pages 587-591, November 1963, or Macromolecules, Vol. 35, No. 7, 2002.

Specific X-ray crystallinity values for the present butene-1 polymer are of from 10% to 45%, in particular from 15% to 35%.

Moreover, the present butene-1 polymer preferably has at least one of the following further features:

- Mw equal to or greater than 50,000 g/mol, or equal to or greater than 70,000 g/mol, in particular from 50,000 to 180,000 g/mol, or from 70,000 to 150,000 g/mol;
- isotactic pentads (mmmm) measured with $^{13}C$-NMR operating at 150.91 MHz higher than 90%; in particular higher than 93% or higher than 95%;
- 4,1 insertions not detectable using a $^{13}C$-NMR operating at 150.91 MHz;
- a yellowness index lower than 0; in particular from 0 to -10 or from -1 to -9 or from -1 to -5;
- a Shore D value equal to or lower than 50, or equal to or lower than 45, in particular from 15 to 50 or from 15 to 45;
- a tensile stress at break, measured according to ISO 527, of from 10 MPa to 45 MPa, in particular from 15 MPa to 35 MPa;
- a tensile elongation at break, measured according to ISO 527, of from 400% to 900%; in particular from 450% to 700%;
- a glass transition temperature of -17°C or less, or of -19°C or less, wherein the lower limit is -23°C.
- a density of 0.880 g/cm$^3$ or more, in particular of 0.885 g/cm$^3$ or more; wherein the upper limit is of 0.0.91 g/cm$^3$, or of 0.899 g/cm$^3$;
- content of fraction soluble in xylene at 0°C of 95% by weight or higher, up to 100% by weight.

The butene-1 polymer can be obtained by polymerizing the monomer(s) in the presence of a metallocene catalyst system obtainable by contacting:

- a stereorigid metallocene compound;
- an alumoxane or a compound capable of forming an alkyl metallocene cation; and, optionally,
- an organo aluminum compound.

Preferably the stereorigid metallocene compound belongs to the following formula (I):

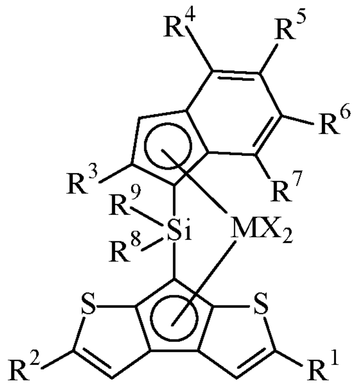

wherein:

M is an atom of a transition metal selected from those belonging to group 4; preferably M is zirconium;
X, equal to or different from each other, is a hydrogen atom, a halogen atom, a R, OR, OR'O, $OSO_2CF_3$, OCOR, SR, $NR_2$ or $PR_2$ group wherein R is a linear or branched, saturated or unsaturated $C_1$-$C_{20}$-alkyl, $C_3$-$C_{20}$-cycloalkyl, $C_6$-$C_{20}$-aryl, $C_7$-$C_{20}$-alkylaryl or $C_7$-$C_{20}$-arylalkyl radical, optionally containing heteroatoms belonging to groups 13-17 of the Periodic Table of the Elements; and R' is a $C_1$-$C_{20}$-alkylidene, $C_6$-$C_{20}$-arylidene, $C_7$-$C_{20}$-alkylarylidene, or $C_7$-$C_{20}$-arylalkylidene radical; preferably X is a hydrogen atom, a halogen atom, a OR'O or R group; more preferably X is chlorine or a methyl radical;
$R^1$, $R^2$, $R^5$, $R^6$, $R^7$, $R^8$ and $R^9$, equal to or different from each other, are hydrogen atoms, or linear or branched, saturated or unsaturated $C_1$-$C_{20}$-alkyl, $C_3$-$C_{20}$-cycloalkyl, $C_6$-$C_{20}$-aryl, $C_7$-$C_{20}$-alkylaryl or $C_7$-$C_{20}$-arylalkyl radicals, optionally containing heteroatoms belonging to groups 13-17 of the Periodic Table of the Elements; or $R^5$ and $R^6$, and/or $R^8$ and $R^9$ can optionally form a saturated or unsaturated, 5 or 6 membered rings, said ring can bear $C_1$-$C_{20}$ alkyl radicals as substituents; with the proviso that at least one of $R^6$ or $R^7$ is a linear or branched, saturated or unsaturated $C_1$-$C_{20}$-alkyl radical, optionally containing heteroatoms belonging to groups 13-17 of the Periodic Table of the Elements; preferably a $C_1$-$C_{10}$-alkyl radical;
$R^3$ and $R^4$, equal to or different from each other, are linear or branched, saturated or unsaturated $C_1$-$C_{20}$-alkyl radicals, optionally containing heteroatoms belonging to groups 13-17 of the Periodic Table of the Elements; preferably $R^3$ and $R^4$ equal to or different from each other are $C_1$-$C_{10}$-alkyl radicals; more preferably $R^3$ is a methyl, or ethyl radical; and $R^4$ is a methyl, ethyl or isopropyl radical.

Preferably the compounds of formula (I) have formula (Ia):

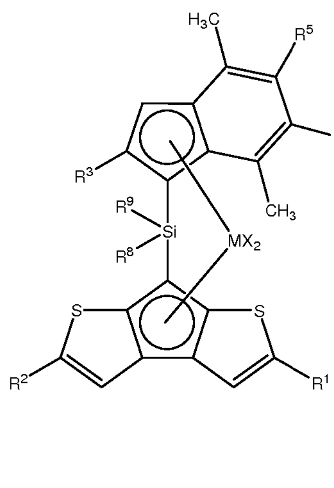

(Ia)

Wherein:

M, X, $R^1$, $R^2$, $R^5$, $R^6$, $R^8$ and $R^9$ have been described above;
$R^3$ is a linear or branched, saturated or unsaturated $C_1$-$C_{20}$-alkyl radical, optionally containing heteroatoms belonging to groups 13-17 of the Periodic Table of the Elements; preferably $R^3$ is a $C_1$-$C_{10}$-alkyl radical; more preferably $R^3$ is a methyl, or ethyl radical.

Specific examples of metallocene compounds are dimethylsilyl{(2,4,7-trimethyl-1-indenyl)-7-(2,5-dimethyl-cyclopenta[1,2-b:4,3-b']-dithiophene)} zirconium dichloride; dimethylsilanediyl{(1-(2,4,7-trimethylindenyl)-7-(2,5-dimethyl-cyclopenta[1,2-b:4,3-b']-dithiophene)}Zirconium dichloride and dimethylsilanediyl{(1-(2,4,7-trimethylindenyl)-7-(2,5-dimethyl-cyclopenta[1,2-b:4,3-b']-dithiophene)}zirconium dimethyl.

Examples of alumoxanes are methylalumoxane (MAO), tetra-(isobutyl)alumoxane (TIBAO), tetra-(2,4,4-trimethyl-pentyl)alumoxane (TIOAO), tetra-(2,3-dimethylbutyl)alumoxane (TDMBAO) and tetra-(2,3,3-trimethylbutyl)alumoxane (TTMBAO).

Examples of compounds able to form an alkylmetallocene cation are compounds of formula $D^+E^-$, wherein $D^+$ is a Brønsted acid, able to donate a proton and to react irreversibly with a substituent X of the metallocene of formula (I) and $E^-$ is a compatible anion, which is able to stabilize the active catalytic species originating from the reaction of the two compounds, and which is sufficiently labile to be able to be removed by an olefinic monomer. Preferably, the anion $E^-$ comprises of one or more boron atoms.

Examples organo aluminum compound are trimethylaluminum (TMA), triisobutylaluminium (TIBA), tris(2,4,4-trimethyl-pentyl)aluminum (TIOA), tris(2,3-dimethylbutyl)aluminium (TDMBA) and tris(2,3,3-trimethylbutyl)aluminum (TTMBA).

Examples of the said catalyst system and of polymerization processes employing such catalyst system can be found in WO2004099269 and WO2009000637.

By operating under known polymerization conditions in the presence of the above described catalysts, the present butene-1 copolymer can be prepared directly in polymerization.

The polymerization process can be carried out in liquid phase, optionally in the presence of an inert hydrocarbon solvent, or in gas phase, using fluidized bed or mechanically agitated gas phase reactors.

The hydrocarbon solvent can be either aromatic (such as toluene) or aliphatic (such as propane, hexane, heptane, isobutane, cyclohexane and 2,2,4-trimethylpentane, isododecane).

Preferably, the polymerization process is carried out by using liquid butene-1 as polymerization medium. The polymerization temperature can be from 20°C to 150°C, in particular between 50°C and 90°C, for example from 65°C to 82°C.

The concentration of hydrogen in the liquid phase during the polymerization reaction (molar ppm $H_2$/ butene-1 monomer) is generally from 1000 ppm to 1900 ppm, in particular from 1100 ppm to 1800 ppm.

The amount of comonomer, in particular ethylene, in the liquid phase can be from 0.1% to 2.5% by weight, in particular from 0.5% to 1.5% by weight, with respect to the total weigh of comonomer and butene-1 monomer present in the polymerization reactor.

In hot-melt adhesive applications, the present butene-1 polymer can be optionally blended with other materials commonly used in the relevant art.

In particular, a hot-melt adhesive polyolefin composition can comprise one or more of the following optional components, in addition to the present butene-1 copolymer:

I) at least one additional polymer, selected in particular from the group of amorphous poly-alpha-olefins, thermoplastic polyurethanes, ethylene/(meth)acrylate copolymers, ethylene/vinyl acetate copolymers and mixtures thereof;
II) at least one resin material different from (I) and selected from aliphatic hydrocarbon resins, terpene/phenolic resins, polyterpenes, rosins, rosin esters and derivatives thereof and mixtures thereof;
III) at least one wax or oil, selected in particular from mineral, paraffinic or naphthenic waxes or oils; and
IV) a nucleating agent.

Examples of nucleating agents are isotactic polypropylene, polyethylene, amides, like stearamides, or talc.

Preferred amounts by weight of said optional components, with respect to the total weight of the hot-melt adhesive polyolefin composition, when present and independently from each other are:

- from 0.1% to 25%, in particular from 1% to 25% by weight of I);
- from 10% to 75%, in particular from 10% to 40% by weight of II);
- from 0.1% to 50%, in particular from 1% to 30% by weight of III);
- from 0.01% to 1%, in particular from 0.1% to 1% by weight of IV).

The said components can be added and blended in the molten state with the present butene-1 polymer by using known polymer processing apparatuses, such as mono- and twin screw extruders.

The said hot-melt adhesive compositions can be used in several fields such as in paper and packaging industry, in furniture manufacture e.g. for edgebands, particularly square edges, and softforming applications, for paneling in high moisture environments and in the production of nonwoven articles, like disposable diapers.

EXAMPLES

Various embodiments, compositions and methods as provided herein are disclosed below in the following examples. These examples are illustrative.

The following analytical methods are used to characterize the polymer compositions.

Thermal properties (melting temperatures and enthalpies)

Determined by Differential Scanning Calorimetry (D.S.C.) on a Perkin Elmer DSC-7 instrument, as hereinafter described.

- For the determination of TmII (the melting temperature measured in the second heating run) a weighted sample (5-10 mg) obtained from the polymerization was sealed into aluminum pans and heated at 200 °C with a scanning speed corresponding to 10 °C/minute. The sample was kept at 200 °C for 5 minutes to allow a complete melting of all the crystallites thus cancelling the thermal history of the sample. Successively, after cooling to -20 °C with a scanning speed corresponding to 10 °C/minute, the peak temperature was taken as the crystallization temperature (Tc). After standing for 5 minutes at -20 °C, the sample was heated for the second time at 200 °C with a scanning speed corresponding to 10 °C/min. In this second heating run, the peak temperature measured was taken as (TmII). If more than one peak was present, the highest (most intense) one was taken as TmII. The area under the peak (or peaks) was taken as global melting enthalpy (DH TmII). - The melting enthalpy and the melting temperature were also measured after aging (without cancelling the thermal history) as follows by using Differential Scanning Calorimetry (D.S.C.) on an Perkin Elmer DSC-7 instrument. A weighted sample (5-10 mg) obtained from the polymerization was sealed into aluminum pans and heated at 200°C with a scanning speed corresponding to 10 °C/minute. The sample was kept at 200 °C for 5 minutes to allow a complete melting of all the crystallites. The sample was then stored for 10 days at room temperature. After 10 days the sample was subjected to DSC, cooled to -20 °C, and then it was heated at 200°C with a scanning speed corresponding to 10°C/min. In this heating run, the peak temperature was taken as the melting temperature (TmI). If more than one peak was present, the highest (most intense) peak was taken as TmI. The area under the peak (or peaks) was taken as global melting enthalpy after 10 days (DH TmI).

MFR

Determined according to norm ISO 1133 with a load of 2.16 kg at 190 °C (standard die).

Intrinsic viscosity

Determined according to norm ASTM D 2857 in tetrahydronaphthalene at 135 °C.

Density

The density of samples was measured according to ISO 1183-1 (ISO 1183-1 method A "Methods for determining the density of non-cellular plastics -Part 1: Immersion method, liquid pycnometer method and titration method"; Method A: Immersion method, for solid plastics (except for powders) in void-free form). Test specimens were taken from compression moulded plaques conditioned for 10 days before carrying out the density measure.

Comonomer contents

Comonomer contents were determined via FT-IR.

The spectrum of a pressed film of the polymer was recorded in absorbance vs. wavenumbers ($cm^{-1}$). The following measurements were used to calculate the ethylene content:

a) area (At) of the combination absorption bands between 4482 and 3950 $cm^{-1}$ which is used for spectrometric normalization of film thickness.

b) factor of subtraction ($FCR_{C2}$) of the digital subtraction between the spectrum of the polymer sample and the absorption band due to the sequences BEE and BEB (B: 1,butene units, E: ethylene units) of the methylenic groups ($CH_2$ rocking vibration).

c) Area ($A_{C2,block}$) of the residual band after subtraction of the $C_2$PB spectrum. It comes from the sequences EEE of the methylenic groups ($CH_2$ rocking vibration).

APPARATUS

A Fourier Transform Infrared spectrometer (FTIR) was used, which is capable of providing the spectroscopic measurements above reported.

A hydraulic press with platens heatable to 200 °C (Carver or equivalent) was used.

METHOD

Calibration of (BEB + BEE) sequences

A calibration straight line is obtained by plotting %(BEB + BEE)wt vs. $FCR_{C2}/A_t$. The slope $G_r$ and the intercept If are calculated from a linear regression.

Calibration of EEE sequences

A calibration straight line is obtained by plotting %(EEE)wt vs. $A_{C2,block}/A_t$. The slope $G_H$ and the intercept In are calculated from a linear regression.

Sample preparation

Using a hydraulic press, a thick sheet is obtained by pressing about g 1.5 of sample between two aluminum foils. If homogeneity is in question, a minimum of two pressing operations are recommended. A small portion is cut from this sheet to mold a film. Recommended film thickness ranges between 0.1-0.3 mm.

The pressing temperature is 140 ± 10 °C.

A crystalline phase modification takes place with time, therefore it is recommended to collect the IR spectrum of the sample film as soon as it is molded.

Procedure

The instrument data acquisition parameters are as follows:

Purge time: 30 seconds minimum.
Collect time: 3 minutes minimum.
Apodization: Happ-Genzel.
Resolution: 2 $cm^{-1}$.
Collect the IR spectrum of the sample vs. an air background.

CALCULATION

Calculate the concentration by weight of the BEE + BEB sequences of ethylene units:

$$\%(BEE + BEB)wt = G_r \cdot \frac{FCR_{C2}}{A_t} + I_r$$

Calculate the residual area (AC2, block) after the subtraction described above, using a baseline between the shoulders of the residual band.

Calculate the concentration by weight of the EEE sequences of ethylene units:

$$\%(EEE)wt = G_H \cdot \frac{A_{C2,\,block}}{A_t} + I_H$$

Calculate the total amount of ethylene percent by weight:

$$\%C2wt = \left[\%(BEE + BEB)wt + \%(EEE)wt\right]$$

NMR analysis of chain structure

$^{13}C$ NMR spectra were acquired on a Bruker AV-600 spectrometer equipped with cryo-probe, operating at 150.91 MHz in the Fourier transform mode at 120°C.

The peak of the $T_{\beta\delta}$ carbon (nomenclature according to C. J. Carman, R. A. Harrington and C. E. Wilkes, Macromolecules, 10, 3, 536 (1977)) was used as internal reference at 37.24 ppm. The samples were dissolved in 1,1,2,2-tetrachloroethane-d2 at 120°C with a 8 % wt/v concentration. Each spectrum was acquired with a 90° pulse, 15 seconds of delay between pulses and CPD to remove $^{1}H$-$^{13}C$ coupling. About 512 transients were stored in 32K data points using a spectral window of 9000 Hz.

The assignments of the spectra, the evaluation of triad distribution and the composition were made according to Kakugo [M. Kakugo, Y. Naito, K. Mizunuma and T. Miyatake, Macromolecules, 16, 4, 1160 (1982)] and Randall [J. C. Randall, Macromol. Chem Phys., C30, 211 (1989)] using the following:

$$BBB = 100\ (T_{\beta\beta})/S = I5$$

$$BBE = 100T_{\beta\delta}/S = I4$$

$$EBE = 100\ P_{\delta\delta}\ /S = I14$$

$$BEB = 100\ S_{\beta\beta}/S = I13$$

$$BEE = 100\ S_{\alpha\delta}/S = I7$$

$$EEE = 100(0.25\ S_{\gamma\delta}+0.5\ S_{\delta\delta})/S = 0.25\ I9 + 0.5I10$$

| Area | Chemical Shift | Assignments | Sequence |
|---|---|---|---|
| 1 | 40.40-40.14 | Sαα | BBBB |
|  | 39.64 | Tδδ | EBE |
| 2 | 39-76-39.52 | Sαα | BBBE |
| 3 | 39.09 | Sαα | EBBE |
| 4 | 37.27 | Tβδ | BBE |
| 5 | 35.20-34.88 | Tββ | BBB |
| 6 | 34.88-34.49 | Sαγ | BBEB+BEBE |
| 7 | 34.49-34.00 | Sαδ | EBEE+BBEE |
| 8 | 30.91 | Sγγ | BEEB |
| 9 | 30.42 | Sγδ | BEEE |
| 10 | 29.90 | Sδδ | EEE |
| 11 | 27.73-26.84 | Sβδ+2$B_2$ | BBB+BBE<br>EBEE+BBEE |
| 12 | 26.70 | 2$B_2$ | EBE |
| 13 | 24.54-24.24 | Sββ | BEB |
| 14 | 11.22 | Pδδ | EBE |
| 15 | 11.05 | Pβδ | BBE |

(continued)

| Area | Chemical Shift | Assignments | Sequence |
|---|---|---|---|
| 16 | 10.81 | Pββ | BBB |

To a first approximation, the *mmmm* was calculated using 2B2 carbons as follows:

| Area | Chemical shift | assignments |
|---|---|---|
| B1 | 28.2 -27.45 | *mmmm* |
| B2 | 27.45 - 26.30 | |
| $mmmm = B_1*100/(B_1+B_2-2*A_4-A_7-A_{14})$ | | |

Mw/Mn and Mz determination by GPC

Measured by way of Gel Permeation Chromatography (GPC) in 1,2,4-trichlorobenzene (TCB). Molecular weight parameters (Mn, Mw, Mz) and molecular weight distributions Mw/Mn for all the samples were measured by using a GPC-IR apparatus by PolymerChar, which was equipped with a column set of four PLgel Olexis mixed-bed (Polymer Laboratories) and an IR5 infrared detector (PolymerChar). The dimensions of the columns were 300 × 7.5 mm and their particle size was 13 $\mu$m. The mobile phase flow rate was kept at 1.0 mL/min. All the measurements were carried out at 150 °C. Solution concentrations were 2.0 mg/mL (at 150 °C) and 0.3 g/L of 2,6-diterbuthyl-*p*-chresole were added to prevent degradation. For GPC calculation, a universal calibration curve was obtained using 12 polystyrene (PS) standard samples supplied by PolymerChar (peak molecular weights ranging from 266 to 1220000). A third-order polynomial fit was used for interpolate the experimental data and obtain the relevant calibration curve. Data acquisition and processing was done by using Empower 3 (Waters). The Mark-Houwink relationship was used to determine the molecular weight distribution and the relevant average molecular weights: the $K$ values were $K_{PS} = 1.21 \times 10^{-4}$ dL/g and $K_{PB} = 1.78 \times 10^{-4}$ dL/g for PS and polybutene (PB) respectively, while the Mark-Houwink exponents $\alpha = 0.706$ for PS and $\alpha = 0.725$ for PB were used.

For butene/ethylene copolymers, as far as the data evaluation is concerned, it was assumed for each sample that the composition was constant in the whole range of molecular weight and the $K$ value of the Mark-Houwink relationship was calculated using a linear combination as reported below:

$$K_{EB} = x_E K_{PE} + x_B K_{PB}$$

where $K_{EB}$ is the constant of the copolymer, $K_{PE}$ ($4.06 \times 10^{-4}$, dL/g) and $K_{PB}$ ($1.78 \times 10^{-4}$ dL/g) are the constants of polyethylene (PE) and PB, $x_E$ and $x_B$ are the ethylene and the butene weight relative amount with $x_E + x_B = 1$. The Mark-Houwink exponents $\alpha = 0.725$ was used for all the butene/ethylene copolymers independently on their composition. End processing data treatment was fixed for all samples to include fractions up at 1000 in terms of molecular weight equivalent. Fractions below 1000 were investigated via GC.

Fractions soluble and insoluble in xylene at 0°C (XS-0°C)

2.5 g of polymer composition and 250 $cm^3$ of o-xylene are introduced in a glass flask equipped with a refrigerator and a magnetic stirrer. The temperature is raised in 30 minutes up to the boiling point of the solvent. The so obtained clear solution is then kept under reflux and stirring for further 30 minutes. The closed flask is then cooled to 100°C in air for 10 to 15 minute under stirring and then kept for 30 minutes in thermostatic water bath at 0 °C for 60 minutes as well. The so formed solid is filtered on quick filtering paper at 0°C. 100 $cm^3$ of the filtered liquid is poured in a previously weighed aluminum container which is heated on a heating plate under nitrogen flow, to remove the solvent by evaporation. Thus, one calculates the percent by weight of polymer soluble (Xylene Solubles at 0°C = XS 0°C) from the average weight of the residues. The insoluble fraction in o-xylene at 0°C (xylene Insolubles at 0°C = XI%0°C) is:

$$XI\%0°C=100-XS\%0°C.$$

Determination of X-ray crystallinity

The X-ray crystallinity was measured with an X-ray Diffraction Powder Diffractometer (XDPD) that uses the Cu-Kα1 radiation with fixed slits and able to collect spectra between diffraction angle 2Θ = 5° and 2Θ = 35° with step of 0.1° every 6 seconds.
The samples are diskettes of about 1.5-2.5 mm of thickness and 2.5-4.0 cm of diameter made by compression moulding. The diskettes are aged at room temperature (23°C) for 96 hours.
After this preparation the specimen is inserted in the XDPD sample holder. The XRPD instrument set in order to collect the XRPD spectrum of the sample from diffraction angle 2Θ = 5° to 2Θ = 35° with steps of 0.1° by using counting time of 6 seconds, and at the end the final spectrum is collected.
Defining Ta as the total area between the spectrum profile and the baseline expressed in counts/sec·2Θ and Aa as the total amorphous area expressed in counts/sec·2Θ. Ca is total crystalline area expressed in counts/sec·2Θ.
The spectrum or diffraction pattern is analyzed in the following steps:

1) define a suitable linear baseline for the whole spectrum and calculate the total area (Ta) between the spectrum profile and the baseline;
2) define a suitable amorphous profile, along the whole spectrum, that separate , the amorphous regions from the crystalline ones according to the two phase model;
3) calculate the amorphous area (Aa) as the area between the amorphous profile and the baseline;
4) calculate the crystalline area (Ca) as the area between the spectrum profile and the amorphous profile as Ca = Ta- Aa
5) Calculate the degree of crystallinity (%Cr) of the sample using the formula:

$$\%Cr = 100 \text{ x } Ca / Ta$$

Flexural Modulus

According to norm ISO 178, measured 10 days after molding.

Shore D

According to norm ISO 868, measured 10 days after molding.

Tensile stress and elongation at break

According to norm ISO 527 on compression molded plaques, measured 10 days after molding.

Glass transition temperature via DMTA (Dynamic Mechanical Thermal Analysis) Molded specimens of 76 mm by 13 mm by 1 mm are fixed to the DMTA machine for tensile stress. The frequency of the tension and relies of the sample is fixed at 1 Hz. The DMTA translates the elastic response of the specimen starting from -100 °C to 130 °C. In this way it is possible to plot the elastic response versus temperature. The elastic modulus for a viscoelastic material is defined as E=E'+iE". The DMTA can split the two components E' and E" by their resonance and plot E' vs temperature and E'/E" = tan (δ) vs temperature.
The glass transition temperature Tg is assumed to be the temperature at the maximum of the curve E'/E" = tan (δ) vs temperature.

Yellowness index

Determined accordingly to ASTM D1925.

Examples 1-3 and Comparative Example 1

Preparation of the metallocene catalyst (A-1)

Dimethylsilyl{(2,4,7-trimethyl-1-indenyl)-7-(2,5-dimethyl-cyclopenta[1,2-b:4,3-b']-dithiophene)} zirconium dichloride (A-1) was prepared according to Example 32 of WO0147939.

Preparation of the catalytic solution

Under nitrogen atmosphere, 8.1 L of a solution of 4.5 %wt/v of TIBA in isododecane (1.84 mol of TIBA) and 760 mL of a solution 30 %wt/wt of MAO in toluene (3.65 moles of MAO) were loaded in a 20 L jacketed glass reactor equipped with an anchor stirrer and allowed to react at room temperature for about 1 hour under stirring.
After this time, the metallocene A-1 (1.6 g, 2.75 mmol) was added and dissolved under stirring for about 30 minutes.
The final solution was discharged from the reactor into a cylinder through a filter to remove solid residues (if any).
The composition of the solution is as follows:

| Al g/L | Zr %w | Al/Zr mol ratio | Metallocene Conc. mg/L |
|---|---|---|---|
| 16.7 | 0.028 | 1996 | 181 |

**Polymerization**

The polymerization was carried out continuously in a pilot plant comprising a stirred reactor in which liquid butene-1 constituted the liquid medium.
The polymerization conditions are reported in Table 1.

Table 1

| | Ex. 1 | Ex. 2 | Ex. 3 |
|---|---|---|---|
| Operative conditions | | | |
| Temperature (°C) | 75 | 75 | 75 |
| Hz in liquid phase (ppm mol) | 1440 | 1570 | 1540 |
| $C_2H_4$ in liquid phase (weight%) | 0.53 | 0.87 | 1.09 |
| Mileage (kg/gMe) | 1733 | 1933 | 2070 |
| Note: $C_2H_4$ = ethylene; kg/g Me = kilograms of polymer per gram of metallocene catalyst (A-1); Split = amount of polymer produced in the concerned reactor. | | | |

In Table 2 the properties of the final products are specified.
Table 2 reports also the properties of the butene-1 polymer taken as comparison (Comparative Example 1), which is a commercial copolymer containing 6.8% by mole of ethylene, prepared with a Ziegler-Natta catalyst and subsequently subjected to a peroxide treatment, to increase the MFR value.

Table 2

| | | Ex. 1 | Ex. 2 | Ex. 3 | Comp. 1 |
|---|---|---|---|---|---|
| MFR 190° 2.16Kg | g/10min | 200 | 200 | 190 | 200 |
| Intrinsic Viscosity | dl/g | 0.59 | 0.61 | 0.60 | 0.69 |
| $C_2H_4$ IR | mol % | 3.1 | 5.6 | 7.3 | 6.8 |
| TmII | °C | 68-74-83 | 74 | 66 | 81.4 |
| DH TmII | J/g | 18.2 | 7.3 | 0.6 | 16.5 |
| TmI | °C | 97 | 38-60-74-86.5 | 37.5-56-67 | 92.5 |
| DH TmI | J/g | 55 | 40.5 | 37.5 | 40.4 |
| X - Ray crystallinity | % | 41 | 32 | 29 | 38 |
| Xylene Soluble at 0°C | % | - | 99.5 | 99.5 | 63.4 |
| Mw | g/mol | 92159 | 91506 | 91859 | 88370 |
| Mn | g/mol | 43476 | 42348 | 43286 | 28182 |

(continued)

| | | Ex. 1 | Ex. 2 | Ex. 3 | Comp. 1 |
|---|---|---|---|---|---|
| Mw/Mn | | 2.1 | 2.2 | 2.1 | 3.1 |
| Mz | g/mol | 152762 | 152517 | 151964 | 148561 |
| Density | $g/cm^3$ | 0.905 | 0.898 | 0.891 | 0.899 |
| Flexural Modulus | MPa | 230 | 180 | 140 | 140 |
| Strength at Break | MPa | 28.5 | 24.3 | 20.4 | |
| Elongation at Break | % | 444 | 470 | 500 | 470 |
| Hardness Shore D | D | 46.9 | 40.6 | 31.2 | 40.3 |
| Glass transition temperature | °C | -17 | -20 | -20 | -18 |

## Claims

**1.** A butene-1 polymer having:

a) a MFR value of from 100 to 300 g/10 min., preferably from 110 to 300 g/10 min., more preferably from 150 to 250 g/10 min., measured according to ISO 1133 at 190°C with a load of 2.16 kg;
b) an intrinsic viscosity (IV) measured in tetrahydronaphthalene (THN) at 135°C equal to or lower than 0.70 dl/g, or equal to or lower than 0.65 dl/g, in particular from 0.50 dl/g to 0.70 dl/g or from 0.50 dl/g to 0.65 dl/g;
c) a Mw/Mn value, where Mw is the weight average molar mass and Mn is the number average molar mass, both measured by GPC (Gel Permeation Chromathograpy), equal to or lower than 2.8, in particular equal to or lower than 2.5, the lower limit being of 1.5 in all cases;
d) a Mz value of 90,000 g/mol or higher, or of 100,000 g/mol or higher, in particular from 90,000 to 200,000 g/mol or from 100,000 to 190,000 g/mol;
e) a comonomer content, when comonomer is present, of up to 10% by mole, in particular of from 1% to 10% by mole, or from 4% to 10% by mole or from 6.5% to 10% by mole;
f) a glass transition temperature of -16°C or less, wherein the lower limit is -23°C.

**2.** The butene-1 polymer of claim 1, having DH TmII values of 25 J/g or less, measured with a scanning speed corresponding to 10°C/min.

**3.** The butene-1 polymer composition of claim 1, having a Mw equal to or greater than 50,000 g/mol, or equal to or greater than 70,000 g/mol, in particular from 50,000 to 180,000 g/mol, or from 70,000 to 150,000 g/mol.

**4.** A process for preparing the butene-1 polymer of claim 1, comprising polymerizing the monomer(s) in the presence of a metallocene catalyst obtainable by contacting:

- a stereorigid metallocene compound;
- an alumoxane or a compound capable of forming an alkyl metallocene cation; and, optionally,
- an organo aluminum compound.

**5.** Manufactured articles consisting of or comprising the butene-1 polymer of claim 1.

**6.** The manufactured articles of claim 5, in form of films or fibers.

**7.** A hot-melt adhesive composition consisting of or comprising the butene-1 polymer composition of claim 1.

## Patentansprüche

**1.** Buten-1-Polymer, das aufweist:

a) einen MFR-Wert von 100 bis 300 g/10 min., vorzugsweise von 110 bis 300 g/10 min., bevorzugter 150 bis 250 g/10 min., gemessen gemäß ISO 1133 bei 190 °C unter einer Last von 2,16 kg;
b) eine Grenzviskosität (IV), gemessen in Tetrahydronaphthalin (THN) bei 135 °C gleich oder kleiner als 0,70 dl/g, oder gleich oder kleiner als 0,65 dl/g, insbesondere 0,50 dl/g bis 0,70 dl/g oder 0,50 dl/g bis 0,65 dl/g;
c) einen Mw/Mn-Wert, wobei Mw das durchschnittliche Molekulargewicht (Gewichtsmittel) und Mn das durchschnittliche Molekulargewicht (Zahlenmittel) ist, beide gemessen mittels GPC (Gelpermeationschromatographie), gleich oder kleiner als 2,8, insbesondere gleich oder kleiner als 2,5, wobei die untere Grenze in allen Fällen 1,5 ist;
d) einen Mz-Wert von 90.000 g/mol oder höher, oder 100.000 g/mol oder höher, insbesondere 90.000 bis 200.000 g/mol oder 100.000 bis 190.000 g/mol;
e) einen Comonomergehalt, wenn Comonomer vorhanden ist, von bis zu 10 Mol.%, insbesondere 1 Mol.% bis 10 Mol.%, oder 4 Mol.% bis 10 Mol.% oder 6,5 Mol.% bis 10 Mol.%;
f) eine Glasübergangstemperatur von -16 °C oder darunter, wobei die untere Grenze -23 °C ist.

**2.** Buten-1-Polymer nach Anspruch 1, das DH TmII-Werte von 25 J/g oder weniger aufweist, gemessen mit einer Scangeschwindigkeit, die 10 °C/min entspricht.

**3.** Buten-1-Polymerzusammensetzung nach Anspruch 1, die ein Mw gleich oder größer als 50.000 g/mol, oder gleich oder größer als 70.000 g/mol, insbesondere 50.000 bis 180.000 g/mol, oder 70.000 bis 150.000 g/mol aufweist.

**4.** Verfahren zur Herstellung des Buten-1-Polymers nach Anspruch 1, umfassend Polymerisieren des Monomers/der Monomere in Gegenwart eines Metallocenkatalysators, der erhältlich ist durch Kontaktieren von:

- einer stereorigiden Metallocenverbindung;
- einem Alumoxan oder einer Verbindung, die in der Lage ist, ein Alkylmetallocen-Kation zu bilden; und gegebenenfalls
- einer Organoaluminiumverbindung.

**5.** Fertigungsartikel, die aus dem Buten-1-Polymer nach Anspruch 1 bestehen oder dieses umfassen.

**6.** Fertigungsartikel nach Anspruch 5 in Form von Folien oder Fasern.

**7.** Heißschmelzklebstoffzusammensetzung, die aus der Buten-1-Polymerzusammensetzung nach Anspruch 1 besteht oder diese umfasst.

## Revendications

**1.** Polymère de butène-1 présentant :

a) une valeur de MFR de 100 à 300 g/10 min, de préférence de 110 à 300 g/10 min., plus préférablement de 150 à 250 g/10 min., mesurée selon la norme ISO 1133 à 190 °C sous une charge de 2.16 kg ;
b) une viscosité intrinsèque (IV) mesurée dans du tétrahydronaphtalène (THN) à 135 °C égale ou inférieure à 0,70 dl/g ou égale ou inférieure à 0,65 dl/g, en particulier de 0,50 dl/g à 0,70 dl/g ou de 0,50 dl/g à 0,65 dl/g ;
c) une valeur de Mw/Mn, Mw étant la masse molaire moyenne en poids et Mn étant la masse molaire moyenne en nombre, toutes deux mesurées par CPG (chromatographie par perméation de gel), égale ou inférieure à 2,8, en particulier égale ou inférieure à 2,5, la limite inférieure étant de 1,5 dans tous les cas ;
d) une valeur de Mz de 90.000 g/mole ou plus ou de 100.000 g/mole ou plus, en particulier de 90.000 à 200.000 g/mole ou de 100.000 à 190.000 g/mole ;
e) une teneur en comonomère, lorsque le comonomère est présent, de jusqu'à 10 % en mole, en particulier de 1 % à 10 % en mole, ou de 4 % à 10 % en mole ou de 6,5 % à 10 % en mole,
f) une température de transition vitreuse de -16 °C ou moins, la limite inférieure étant de -23 °C.

**2.** Polymère de butène-1 selon la revendication 1, présentant des valeurs de DH TmII de 25 J/g ou moins, mesurées à une vitesse de balayage correspondant à 10 °C/min.

**3.** Composition de polymère de butène-1 selon la revendication 1, présentant une Mw égale ou supérieure à 50.000 g/mole ou égale ou supérieure à 70.000 g/mole, en particulier de 50.000 à 180.000 g/mole ou de 70.000 à 150.000

g/mole.

**4.** Procédé de préparation du polymère de butène-1 selon la revendication 1, comprenant la polymérisation du ou des monomères en présence d'un catalyseur de type métallocène pouvant être obtenu par mise en contact de :

- un composé stéréorigide de type métallocène ;
- un alumoxane ou un composé en mesure de former un cation d'alkylmétallocène ; et, éventuellement,
- un composé organoaluminique.

**5.** Articles fabriqués constitués par ou comprenant le polymère de butène-1 selon la revendication 1.

**6.** Articles fabriqués selon la revendication 5, sous la forme de films ou de fibres.

**7.** Composition adhésive thermofusible constituée par ou comprenant la composition de polymère de butène-1 selon la revendication 1.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 4677025 A
- US 4960820 A
- WO 2006045687 A
- WO 2015074830 A
- EP 1477499 A
- WO 2004099269 A
- WO 2009000637 A
- WO 0147939 A


### Non-patent literature cited in the description


- *Journal of Polymer Science Part B: Polymer Letters,* November 1963, vol. 1 (11), 587-591
- *Macromolecules,* 2002, vol. 35 (7
- **C. J. CARMAN ; R. A. HARRINGTON ; C. E. WILKES.** *Macromolecules,* 1977, vol. 10 (3), 536
- **M. KAKUGO ; Y. NAITO ; K. MIZUNUMA ; T. MIYATAKE.** *Macromolecules,* 1982, vol. 16 (4), 1160
- **J. C. RANDALL.** *Macromol. Chem Phys.,* 1989, vol. C30 (211